(19) **Europäisches Patentamt European Patent Office Office européen des brevets**

(11) **EP 4 706 816 A1**

(12) **EUROPEAN PATENT APPLICATION**
published in accordance with Art. 153(4) EPC

(43) Date of publication:
**11.03.2026 Bulletin 2026/11**

(21) Application number: **24830853.8**

(22) Date of filing: **27.06.2024**

(51) International Patent Classification (IPC):
**B01J 20/26** (2006.01)  **B01J 20/28** (2006.01)
**B01J 20/32** (2006.01)  **C02F 1/28** (2023.01)
**C22B 3/24** (2006.01)

(52) Cooperative Patent Classification (CPC):
**B01J 20/26; B01J 20/28; B01J 20/30; B01J 20/32; C02F 1/28; C22B 3/22; C22B 3/24; C22B 26/12**

(86) International application number:
**PCT/CN2024/101859**

(87) International publication number:
**WO 2025/002219 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.06.2023 CN 202310769636**

(71) Applicants:
• **China Petroleum & Chemical Corporation Beijing 100728 (CN)**
• **Sinopec (Beijing) Research Institute of Chemical Industry Co., Ltd. Beijing 100013 (CN)**

(72) Inventors:
• **ZHAO, Muhua Beijing 100013 (CN)**
• **LIU, Yiqun Beijing 100013 (CN)**
• **PAN, Guoyuan Beijing 100013 (CN)**
• **ZHANG, Yang Beijing 100013 (CN)**
• **ZHANG, Xinmiao Beijing 100013 (CN)**
• **YU, Hao Beijing 100013 (CN)**
• **ZHAO, Guoke Beijing 100013 (CN)**
• **TANG, Gongqing Beijing 100013 (CN)**

(74) Representative: **Hoffmann Eitle Patent- und Rechtsanwälte PartmbB Arabellastraße 30 81925 München (DE)**

(54) **LITHIUM ADSORPTION MATERIAL, PREPARATION METHOD THEREFOR AND USE THEREOF**

(57)    The present invention relates to the field of adsorption materials. Disclosed are a lithium adsorption material, a preparation method therefor and a use thereof.

S-4800 5.0kV 7.3mm x20.0k SE(M)                    2.00um

FIG. 1

EP 4 706 816 A1

**Description**

**CROSS-REFERENCE TO RELATED APPLICATIONS**

The application claims the benefit of the China patent application No. "202310769636.1", filed on June 27, 2023, the content of which is specifically and entirely incorporated herein by reference.

**TECHNICAL FIELD**

The present disclosure relates to the technical field of adsorption materials, in particular to a lithium ion adsorption material, a preparation method therefor and a use thereof.

**BACKGROUND ART**

With the rapid development of lithium battery industry, the demand of lithium resources is continuously growing in various industries, and the importance of lithium production is gradually enhanced. At present, lithium resources are mainly distributed in lithium ores and salt lake brine, but lithium ore resources are constantly decreasing and the development costs are continuously increasing; in contrast, lithium resources in salt lake brine have the advantages of low cost and abundant reserves. China has abundant liquid lithium resources, but the extraction of lithium from lithium water resources is a challenging task.

Currently, the lithium extraction from salt lake brine methods are mainly composed of adsorption, precipitation, extraction, electrodialysis process, calcination and so on, wherein adsorption has advantages of simple process, environmentally friendly, energy saving, and desirable selectivity, thus the method is superior to other methods in terms of time and costs, and exhibits the wide application prospect. The lithium lake brine often has a defect of low lithium concentration, thus the preparation of adsorbent with a high selectivity is the core of lithium recovery with an adsorption method. The lithium adsorbent with high selectivity mainly comprises ion sieve type adsorbent and amorphous hydroxide adsorbent. However, because these synthesized adsorbents are in powder form, which cannot be directly applied in the conventional equipment (e.g., fixed bed) for performing the adsorption-desorption lithium extraction. There are also lithium adsorbent granulated to obtain granulated lithium adsorbent material, the conventional granulation method comprises (1) granulation with inorganic binder such as alumina and silica gel, and the granulated adsorbent prepared with the method has a simple process, but it has poor stability, it is often used in conjunction with a polymer granulation process; (2) granulation with natural polymer materials such as chitosan, sodium alginate, however, the product prepared by the method has poor long-term stability; (3) granulation with organic polymer (e.g., polyvinylidene fluoride, polyvinyl chloride) as a binder, but the granulated adsorbent prepared with the method has poor hydrophilicity, and is prone to cause embedding of the powder adsorbent, which results in a sharp fall of the adsorption capacity and poor long-term cycle performance.

In view of the foregoing background, it is urgent to address the problems of poor hydrophilicity of polyvinyl chloride based granulated products, embedding of the adsorbent, and degradation of long-term cycle performance.

**SUMMARY OF THE INVENTION**

The present disclosure aims to overcome the defects in the prior art that the granulated product with polyvinyl chloride as a skeleton has a poor hydrophilicity, poor stability for embedding the lithium ion sieve, the lithium ion sieve is prone to agglomerate, which results in blockage of pores and cracking of an adsorbent caused by salt crystallization during the cyclic use process, and provides a lithium adsorption material, a preparation method therefor and a use thereof, the lithium adsorption material comprises a core with a specific pore structure and surface pores with a specific average diameter coated on the surface of said core, and the shell has a specific thickness, the lithium adsorption material with the specific structure has a special structure having small pores in the outer shell and large pores in the inner core, the mass transfer rate of water and salt can be increased, and when the lithium adsorption material is used for extracting lithium in a liquid environment, the adsorption capacity for lithium can be significantly improved.

In order to achieve the above object, the first aspect of the present disclosure provides a lithium adsorption material, the lithium adsorption material comprises a core and a shell covering the surface of the core;

pores exist in the shell of the lithium adsorption material, and an average diameter of the pores measured by a scanning electron microscope(SEM) is 0.01-2.5$\mu$m;
the core of the lithium adsorption material comprises finger-like pores, and in the cross section of the lithium adsorption material, a maximum average length of the finger-like pores measured by the SEM is 1-7$\mu$m, and a minimum average length of the finger-like pores measured by the SEM is 0.05-2.5$\mu$m;

the minimum average length of the finger-like pores in the core is greater than the average diameter of the pores on the shell;

a thickness of the shell of the lithium adsorption material measured by the SEM is 1-550μm.

The second aspect of the present disclosure provides a method for preparing the lithium adsorption material comprising :

(1) mixing polyvinyl chloride, polyacrylic acid and lithium ion sieve with an oil phase solvent to obtain a mixed solution;
(2) dropwise adding the mixed solution to an aqueous solvent under the conditions of a temperature of 20-60°C and a humidity of 40-80% to prepare a lithium adsorption material.

The third aspect of the present disclosure provides a lithium adsorption material prepared with the aforementioned method.

The fourth aspect of the present disclosure provides a use of the lithium adsorption material in extracting lithium.

Due to the aforementioned technical scheme, the lithium adsorption material and the preparation method therefor and use thereof provided by the present disclosure have the following beneficial effects:

The lithium adsorption material provided by the present disclosure comprises a core with a specific pore structure and surface pores with a specific average diameter coated on the surface of said core, and the shell has a specific thickness, the lithium adsorption material with the specific structure has a special structure having small pores in the outer shell and large pores in the inner core, the mass transfer rate of water can be increased, and when the lithium adsorption material is used for extracting lithium in a liquid environment, the adsorption capacity for lithium can be significantly improved.

Optionally, the lithium adsorption material comprises a skeleton and a hydroxyl-modified lithium ion sieve dispersed in the skeleton, and the skeleton comprising polyvinyl chloride and polyacrylic acid, and the lithium ion sieve is connected with the skeleton through the hydroxyl groups. Wherein the hydroxyl groups in the lithium ion sieve have good compatibility with the polar group (-COOH) on the polyacrylic acid molecular chain and polyvinyl chloride, such that the lithium ion sieve can be uniformly dispersed in the skeleton comprising polyvinyl chloride and polyacrylic acid, the embedding phenomenon of an adsorbent (the lithium ion sieve) is reduced, in addition, the carboxyl group (-COOH) on the polyacrylic acid molecular chain can promote lithium ion transfer, such that the adsorption rate of lithium adsorption material is significantly improved.

Optionally, the polyacrylic acid can inhibit the formation of salt crystals, particularly the formation of salt crystals under high salinity conditions, thereby reducing the phenomenon that the pores and channels of the lithium adsorption material are blocked due to the crystallization of inorganic salts in the internal pores and channels of the lithium adsorption material during the cyclic adsorption and desorption process, improving the desorption efficiency of lithium ions, avoiding the phenomenon that polyvinyl chloride is cracked under the exchange action of water flow and salt in the long-term use process, and prolonging the cyclic service life of the lithium adsorption material.

Moreover, the polyacrylic acid has excellent hydrophilicity and mechanical strength, and can significantly improve mechanical properties of the skeleton comprising polyacrylic acid and swelling properties in a salt solution.

In the method for preparing the lithium adsorption material, a mixed solution containing polyvinyl chloride, polyacrylic acid and a lithium ion sieve is dropwise added into an aqueous phase solvent under the condition of specific temperature and humidity, the obtained lithium adsorption material comprises a core with a specific pore structure and surface pores with a specific average diameter coated on the surface of said core, and the shell has a specific thickness, the lithium adsorption material with the specific structure has a special structure with small pores in the outer shell and large pores in the inner core, the mass transfer rate of water and salt can be increased, and when the lithium adsorption material is used for extracting lithium in a liquid environment, the adsorption capacity for lithium can be significantly improved. In addition, the polyacrylic acid has excellent hydrophilicity and mechanical strength, and can significantly improve mechanical properties of the skeleton comprising polyacrylic acid and swelling properties in a salt solution.

## BRIEF DESCRIPTION OF THE DRAWINGS

FIG. 1 illustrates a SEM photograph of a surface of the lithium adsorption material prepared in Example 1;
FIG. 2 illustrates a SEM photograph of a cross section of the lithium adsorption material prepared in Example 1;
FIG. 3 illustrates a SEM image of a cross section of the lithium adsorption material prepared in Example 1;
FIG. 4 illustrates a SEM image of a cross section of the lithium adsorption material prepared in Comparative Example 1;
FIG. 5 illustrates a SEM image of a cross section of the lithium adsorption material prepared in Comparative Example 2;

FIG. 6 illustrates a SEM image of a cross section of the lithium adsorption material prepared in Example 1 after use for 30 cycles in an adsorption column;

FIG. 7 illustrates a SEM image of a cross section of the lithium adsorption material prepared in Comparative Example 1 after use for 30 cycles in an adsorption column;

FIG. 8 illustrates a photograph of the lithium adsorption material prepared in Example 1.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present disclosure provides a lithium adsorption material, the lithium adsorption material comprises a core and a shell covering the surface of the core;

pores exist in the shell of the lithium adsorption material, and an average diameter of the pores measured by a SEM is 0.01-2.5$\mu$m;

the core of the lithium adsorption material comprises finger-like pores, and in the cross section of the lithium adsorption material, a maximum average length of the finger-like pores measured by the SEM is 1-7$\mu$m, and a minimum average length is 0.05-2.5$\mu$m;

the minimum average length of the finger-like pores in the core is greater than the average diameter of the pores on the shell;

a thickness of the shell of the lithium adsorption material measured by the SEM is 1-550$\mu$m.

In the present disclosure, the lithium adsorption material comprises a core with a specific pore structure and surface pores with a specific average diameter coated on the surface of said core, and the shell has a specific thickness, the lithium adsorption material with the specific structure has a special structure having small pores in the outer shell and large pores in the inner core, the mass transfer rate of water can be increased, and when the lithium adsorption material is used for extracting lithium in a liquid environment, the adsorption capacity for lithium can be significantly improved without leaking the powder lithium ion sieve.

In the present disclosure, the lithium adsorption material is cut at intervals of 0.5mm along the direction parallel to the equator of the particles of the lithium adsorption material and the direction vertical to the equator of the particles of the lithium adsorption material, in order to observe the core structure of lithium ion adsorption material in different cross sections, it can be discovered through observation that the core of the lithium adsorption material contains finger-like pores in different cross sections, and the maximum average length of the finger-like pores measured by the SEM of each cross section falls into the range of 1-7$\mu$m; the minimum average length of the finger-like pores measured by the SEM of each cross section falls into the range of 0.05-2.5$\mu$m. On this basis, the inventors of the present disclosure reasonably expects that finger-like pores are contained in the core of the whole lithium adaptation material, and the finger-like pores are in a three-dimensional structure and have the specific structure disclosed by the present disclosure.

In the present disclosure, when the SEM is used for measuring the maximum average length and minimum average length of finger-like pores in core of lithium adaptation material, 10 observation points are randomly selected to carry out the SEM test, the dimensions of each observation area is not less than 500$\times$500$\mu$m, and an average value is calculated.

In the present disclosure, when the SEM is used for measuring an average diameter of pores on the shell of lithium absorption material, 10 observation points are randomly selected to perform the scanning SEM test, the dimensions of each observation area is not less than 500$\times$500$\mu$m, and an average value is calculated, the long side diameters and the short side diameters of all pores in the observation area are counted, the average pore diameter refers to an average value of the counted long side diameters and the counted short side diameters, wherein the long side refers to the longest dimension of the pore diameter, namely the distance between two points which are farthest on the contour of the pore diameter; the short side refers to the length of a straight line with the longest distance between the intersection points intersecting with the contour of pore diameter along the direction of straight line perpendicular to the long side.

In the present disclosure, an average diameter of pores on the shell of the lithium adsorption material measured by SEM is within a range of 0.01-2.5$\mu$m, such as 0.01$\mu$m, 0.02$\mu$m, 0.04$\mu$m, 0.06$\mu$m, 0.08$\mu$m, 0.1$\mu$m, 0.15$\mu$m, 0.2$\mu$m, 0.25$\mu$m, 0.3$\mu$m, 0.35$\mu$m, 0.4$\mu$m, 0.45$\mu$m, 0.5$\mu$m, 0.55$\mu$m, 0.6$\mu$m, 0.65$\mu$m, 0.7$\mu$m, 0.75$\mu$m, 0.8$\mu$m, 0.85$\mu$m, 0.9$\mu$m, 1$\mu$m, 1.1$\mu$m, 1.2$\mu$m, 1.3$\mu$m, 1.4$\mu$m, 1.5$\mu$m, 1.6$\mu$m, 1.7$\mu$m, 1.8$\mu$m, 1.9$\mu$m, 2$\mu$m, 2.1$\mu$m, 2.2$\mu$m, 2.3$\mu$m, 2.4$\mu$m, 2.5$\mu$m, and a random value within the range consisting of any two thereof.

In the present disclosure, the maximum average length of the pores in cross section of the lithium adsorption material measured by the SEM is within a range of 1-7$\mu$m, for example, it may be 1$\mu$m, 1.5$\mu$m, 2$\mu$m, 2.5$\mu$m, 3$\mu$m, 3.5$\mu$m, 4$\mu$m, 4.5$\mu$m, 5$\mu$m, 5.5$\mu$m, 6$\mu$m, 6.5$\mu$m, 7$\mu$m, and a random value within the range consisting of any two thereof; the minimum average length of the pores in cross section of the lithium adsorption material measured by the SEM is within a range of 0.5-1.5$\mu$m, it may be, for example, 0.05$\mu$m, 0.1$\mu$m, 0.15$\mu$m, 0.2$\mu$m, 0.25$\mu$m, 0.3$\mu$m, 0.35$\mu$m, 0.4$\mu$m, 0.45$\mu$m, 0.5$\mu$m, 0.55$\mu$m, 0.6$\mu$m, 0.65$\mu$m, 0.7$\mu$m, 0.75$\mu$m, 0.8$\mu$m, 0.85$\mu$m, 0.9$\mu$m, 0.95$\mu$m, 1$\mu$m, 1.1$\mu$m, 1.2$\mu$m, 1.3$\mu$m, 1.4$\mu$m, 1.5$\mu$m, 1.6$\mu$m, 1.7$\mu$m, 1.8$\mu$m, 1.9$\mu$m, 2$\mu$m, 2.1$\mu$m, 2.2$\mu$m, 2.3$\mu$m, 2.4$\mu$m, 2.5$\mu$m, and a random value within the range consisting of any two thereof.

In the present disclosure, the thickness of the shell of the lithium adsorption material measured by the SEM is within a range of 1-550$\mu$m, for example, the thickness may be 1$\mu$m, 10$\mu$m, 20$\mu$m, 30$\mu$m, 40$\mu$m, 50$\mu$m, 60$\mu$m, 70$\mu$m, 80$\mu$m, 90$\mu$m, 100$\mu$m, 110$\mu$m, 120$\mu$m, 130$\mu$m, 140$\mu$m, 150$\mu$m, 160$\mu$m, 170$\mu$m, 180$\mu$m, 190$\mu$m, 200$\mu$m, 210$\mu$m, 220$\mu$m, 230$\mu$m, 240$\mu$m, 250$\mu$m, 260$\mu$m, 270$\mu$m, 280$\mu$m, 290$\mu$m, 300$\mu$m, 310$\mu$m, 320$\mu$m, 330$\mu$m, 340$\mu$m, 350$\mu$m, 360$\mu$m, 370$\mu$m, 380$\mu$m, 390$\mu$m, 400$\mu$m, 410$\mu$m, 420$\mu$m, 430$\mu$m, 440$\mu$m, 460$\mu$m, 470$\mu$m, 500$\mu$m, 520$\mu$m, 530$\mu$m, 540$\mu$m, 550$\mu$m, and a random value within the range consisting of any two thereof.

Optionally, the average diameter of the pores on the shell of the lithium adsorption material measured by a SEM is within a range of 0.1-0.5$\mu$m; the maximum average length of the pores in the cross section of the lithium adsorption material measured by a SEM is within a range of 2-5$\mu$m, the minimum average length of the pores in the cross section of the lithium adsorption material measured by a SEM is with a range of 0.5-1.5$\mu$m; the thickness of the shell of the lithium adsorption material measured by a SEM is within a range of 30-500$\mu$m.

According to the present disclosure, the lithium adsorption material has a porosity within a range of 60-80%.

In the present disclosure, when the porosity of the lithium adsorption material is controlled to satisfy the range, the lithium adsorption material has a high mass transfer rate of water.

In the present disclosure, the lithium adsorption material has a porosity within a range of 60-80%, for example, the porosity may be 60%, 62%, 65%, 67%, 70%, 72%, 75%, 77%, 80%, and a random value within the range consisting of any two thereof.

Optionally, the lithium adsorption material has a porosity within a range of 65-75%.

According to the present disclosure, the lithium adsorption material is a spherical shape and/or a spheroidal shape.

In the present disclosure, the spherical shape and/or the spheroidal shape refer to that the aspect ratio of the lithium adsorption material particles is substantially within a range of 1-2. "substantially" means that at least 90% of the lithium adsorption material particles have an aspect ratio within a range of 1-2. The aspect ratio refers to the ratio of the longest dimension of the particle (the distance between two points which are farthest on the particle contour, i.e. the longitudinal axis) and the length of a straight line with the longest distance between the intersection points intersecting with the particle contour along the plane perpendicular to the plane in which the longitudinal axis resides (i.e., the transverse axis). Optionally, at least 95% of the lithium adsorption material has an aspect ratio within the range of 1-2.

According to the present disclosure, an average particle size of the lithium adsorption material is within a range of 2-5mm, such as 2mm, 2.5 mm, 3mm, 3.5mm, 4mm, 4.5 mm, 5mm, and a random value within the range consisting of any two thereof.

In the present disclosure, for the spheroidal particles, the average particle diameter refers to an arithmetic average value of the longitudinal axis and the transverse axis of the lithium adsorption material particles measured by a SEM, specifically, the average particle diameter of the lithium adsorption material = (longitudinal axis + transverse axis)/2.

Optionally, the average particle size of the lithium adsorption material is within a range of 3-4mm.

According to the present disclosure, a specific surface area of the lithium adsorption material is within a range of 10-100 m$^2$/g.

In the present disclosure, when the specific surface area of the lithium adsorption material satisfies the above range, the lithium adsorption material has a high mass transfer rate of water.

In the present disclosure, the specific surface area of the lithium adsorption material is within a range of 10-100 m$^2$/g, for example, it may be 10 m$^2$/g, 15 m$^2$/g, 20 m$^2$/g, 25 m$^2$/g, 30 m$^2$/g, 35 m$^2$/g, 40 m$^2$/g, 45 m$^2$/g, 50 m$^2$/g, 55 m$^2$/g, 60 m$^2$/g, 65 m$^2$/g, 70 m$^2$/g, 75 m$^2$/g, 80 m$^2$/g, 85 m$^2$/g, 90 m$^2$/g, 95 m$^2$/g, 100 m$^2$/g, and a random value within the range consisting of any two thereof.

Optionally, the specific surface area of the lithium adsorption material is within a range of 35-65 m$^2$/g.

According to the present disclosure, the ratio of the sum of surface areas S1 of the pores on the shell and the sum of the maximum cross-sectional areas S2 of the finger-like pores in the core is (0.5-0.9) :1.

In the present disclosure, when the ratio of the sum of surface areas S1 of the pores on the shell and the sum of the maximum cross-sectional areas S2 of the finger-like pores in the core of the lithium adsorption material meets the aforementioned range, the lithium adsorption material has a high mass transfer rate of water in the shell, and will not cause the lithium ion sieve in the lithium adsorption material to fall off under the pressure of flowing water, to ensure that the lithium adsorption material is free from damage and fracture while maintaining the high adsorption capacity.

In the present disclosure, the sum of surface areas of pores on the shell of the lithium absorption material is tested by using a SEM, 10 observation points are randomly selected to carry out the SEM test, the dimensions of each observation area are not less than $500 \times 500 \mu m$, both the sum of the surface areas of the shell and the sum of the surface areas of pores on the shell within the observation range are respectively calculated. The histogram and magic wand tools in the software Photoshop can be selected to obtain the number of pixels representing the dark part of the membrane and pores, the ratio of the said number of pixels to the total number of pixels in the SEM image is then calculated as the percentage of the sum of the surface areas S1 of the pores present on the shell relative to the total surface area of the shell.

The sum of the maximum cross-sectional areas S2 of finger-like pores in the core is obtained by analyzing the cross section SEM pictures of the lithium absorption material by using the image processing software Image J, thereby measuring and calculating the sum of the maximum cross-sectional areas S2 of finger-like pores in the core.

In the present disclosure, the ratio of the sum of surface areas S1 of the pores on the shell and the sum of the maximum cross-sectional areas S2 of the finger-like pores in the core is (0.5-0.9) :1, for example, the ratio is 0.5:1, 0.52:1, 0.54:1, 0.56:1, 0.58:1, 0.6:1, 0.62:1, 0.64:1, 0.66:1, 0.68:1, 0.7:1, 0.72:1, 0.74:1, 0.76:1, 0.78:1, 0.8:1, 0.82:1, 0.84:1, 0.86:1, 0.88:1, 0.9:1, and a random value within the range consisting of any two thereof.

Optionally, the ratio of the sum of surface areas S1 of the pores on the shell and the sum of the maximum cross-sectional areas S2 of the finger-like pores in the core is (0.6-0.8) :1

According to the present disclosure, the lithium adsorption material comprises a skeleton and a lithium ion sieve dispersed in the skeleton; the skeleton comprises polyvinyl chloride and polyacrylic acid.

Optionally, the lithium ion sieve is a hydroxyl-modified lithium ion sieve, the lithium ion sieve is connected with the skeleton through the hydroxyl groups.

In the present disclosure, the lithium adsorption material comprises a skeleton and a lithium ion sieve dispersed in the skeleton, the skeleton comprises polyvinyl chloride and polyacrylic acid, and the lithium ion sieve is connected with the skeleton through the hydroxyl groups. Wherein the hydroxyl groups in the lithium ion sieve have good compatibility with the polar group (-COOH) on the polyacrylic acid molecular chain and polyvinyl chloride, such that the lithium ion sieve can be uniformly dispersed in the skeleton comprising polyvinyl chloride and polyacrylic acid, the embedding phenomenon of an adsorbent (the lithium ion sieve) is reduced, in addition, the carboxyl group (-COOH) on the polyacrylic acid molecular chain can promote lithium ion transfer, such that the adsorption rate of lithium adsorption material is significantly improved.

In the present disclosure, the hydroxyl-providing compound in the hydroxyl-modified lithium ion sieve forms a coating layer on the surface of the lithium ion sieve.

Optionally, the polyacrylic acid can inhibit the formation of salt crystals, particularly the formation of salt crystals under high salinity conditions, thereby reducing the phenomenon that the pores and channels of the lithium adsorption material are blocked due to the crystallization of inorganic salts in the internal pores and channels of the lithium adsorption material during the cyclic adsorption and desorption process, improving the desorption efficiency of lithium ions, avoiding the phenomenon that polyvinyl chloride is cracked under the exchange action of water flow and salt in the long-term use process, and prolonging the cyclic service life of the lithium adsorption material.

Optionally, the polyacrylic acid has excellent hydrophilicity and mechanical strength, and can significantly improve mechanical properties of the skeleton comprising polyacrylic acid and swelling properties in a salt solution.

According to the present disclosure, the polyvinyl chloride is contained in an amount of 16-67wt%, the polyacrylic acid is contained in an amount of 0.06-9wt%, and the lithium ion sieve is contained in an amount of 45-85wt%, based on the total weight of the lithium adsorption material.

In the present disclosure, the total content of polyvinyl chloride, polyacrylic acid and lithium ion sieve in the lithium adsorption material is 100wt%.

In the present disclosure, based on the total weight of the lithium adsorption material, the polyvinyl chloride is contained in an amount of 16-67wt%, for example, it may be 16wt%, 18wt%, 20wt%, 22wt%, 24wt%, 26wt%, 28wt%, 30wt%, 32wt%, 34wt%, 36wt%, 38wt%, 40wt%, 42wt%, 44wt%, 46wt%, 48wt%, 50wt%, 52wt%, 54wt%, 56wt%, 58wt%, 60wt%, 62wt%, 64wt%, 66wt%, 67wt%, and a random value within the range consisting of any two thereof; the polyacrylic acid is contained in an amount of 0.06-9wt%, such as 0.06wt%, 0.08wt%, 0.1wt%, 0.15wt%, 0.2wt%, 0.25wt%, 0.3wt%, 0.35wt%, 0.4wt%, 0.45wt%, 0.5wt%, 0.55wt%, 0.6wt%, 0.65wt%, 0.7wt%, 0.75wt%, 0.8wt%, 0.85wt%, 0.9wt%, and a random value within the range consisting of any two thereof; the lithium ion sieve is contained in an amount of 45-85wt%, for example, it may be 45wt%, 50wt%, 55wt%, 60wt%, 65wt%, 70wt%, 75wt%, 80wt%, 85wt%, and a random value within the range consisting of any two thereof.

In the present disclosure, when the contents of polyvinyl chloride, polyacrylic acid and lithium ion sieve in the lithium adsorption material fall into the aforementioned ranges, the lithium adsorption material has the advantages such as high adsorption capacity, high mass transfer rate, desirable mechanical properties, excellent swelling resistance, and can inhibit salt crystallization.

Optionally, the polyvinyl chloride is contained in an amount of 16-54wt%, the polyacrylic acid is contained in an amount of 0.9-9wt%, and the lithium ion sieve is contained in an amount of 45-80wt%, based on the total weight of the lithium adsorption material.

According to the present disclosure, a coating layer formed by a compound with hydroxyl provided by the hydroxyl-modified lithium ion sieve has a thickness within a range of 1-5nm.

In the present disclosure, when the thickness of a coating layer formed by a compound with hydroxyl provided by the hydroxyl-modified lithium ion sieve is controlled to satisfy the above range, it can ensure excellent compatibility between the lithium ion sieve and the polymer, so that the obtained hydroxyl-modified lithium ion sieve can be uniformly dispersed in the polymer skeleton, and the loading amount of the hydroxyl-modified lithium ion sieve in the polymer skeleton can be increased, thus the lithium ion sieve in the obtained lithium ion sieve has a high specific surface area, thereby increasing the adsorption capacity of the lithium adsorption material.

In the present disclosure, a coating layer formed by a compound with hydroxyl provided by the hydroxyl-modified lithium ion sieve has a thickness within the range of 1-5nm, for example, it may be 1nm, 1.5nm, 2nm, 2.5nm, 3nm, 3.5nm, 4nm, 4.5nm, 5nm, and a random value within the range consisting of any two thereof.

Optionally, a coating layer formed by a compound with hydroxyl provided by the hydroxyl-modified lithium ion sieve has a thickness within the range of 3-5nm.

In the present disclosure, the thickness of a coating layer formed by a compound with hydroxyl provided by the hydroxyl-modified lithium ion sieve is measured by observation with a SEM.

According to the present disclosure, the hydroxyl-modified lithium ion sieve is a polyphenol-modified lithium ion sieve.

In the present disclosure, when the hydroxyl-modified lithium ion sieve is a polyphenol-modified lithium ion sieve, the compatibility between the lithium ion sieve and the macromolecular polymer is improved, so that the lithium ion sieve has desired dispersibility in the polymer skeleton, the modification condition is milder, and the lithium adsorption material has a high adsorption capacity.

According to the present disclosure, the polyphenol is at least one selected from the group consisting of tannic acid, tea polyphenol, apple polyphenol, grape polyphenol, eriodictyol, naringenin, epicatechin, luteolin, naringenin, kaempferol, myricetin and genistein, Optionally at least one of tannic acid, tea polyphenol and apple polyphenol.

According to the present disclosure, the lithium ion sieve is selected from titanium based lithium ion sieve and/or manganese based ion sieve.

According to the present disclosure, the lithium ion sieve is at least one selected from the group consisting of $LiMn_2O_4$, $Li_{1.6}Mn_{1.6}O_4$, $L1_{1.33}Mn_{1.67}O_4$, $Li_4Mn_5O_{12}$, $LiMnO_2$, $Li_2TiO_3$, $Li_{1.33}Ti_{1.66}O_4$ and $Li_4Ti_5O_{12}$.

According to the present disclosure, the hydroxyl-modified lithium ion sieve has a water content less than or equal to 0.5wt%.

In the present disclosure, when the water content of the hydroxyl-modified lithium ionic sieve is controlled to satisfy the aforementioned range, it can avoid the problems that the dispersibility of the hydroxyl-modified lithium ionic sieve in a skeleton is poor, due to the phase separation between the polymer and the hydroxyl-modified lithium ionic sieve caused by the existence of water.

In the present disclosure, the water content of the hydroxyl-modified lithium ion sieve refers to the free water content in the hydroxyl-modified lithium ion sieve.

In the present disclosure, the hydroxyl-modified lithium ion sieve has a water content less than or equal to 0.5wt%, for example, it may be 0.5wt%, 0.45wt%, 0.4wt%, 0.35wt%, 0.3wt%, 0.25wt%, 0.2wt%, 0.15wt%, 0.1wt%, and a random value within the range consisting of any two thereof.

Optionally, the water content of the hydroxyl-modified lithium ion sieve is within the range of 0.1-0.3wt%.

According to the disclosure, the lithium adsorption material has an average particle diameter of the lithium ion sieve in the cross section of lithium adsorption material measured by a SEM being less than or equal to 2.5μm.

In the present disclosure, when the average particle diameter of the lithium ion sieve in the cross section of lithium adsorption material falls into the aforementioned range, the effective adsorption performance of the lithium ion sieve is exerted to the greatest extent, such that the lithium adsorption material has a large adsorption capacity and a high desorption efficiency for lithium ions.

In the present disclosure, the average particle diameter of the lithium ion sieve in the lithium adsorption material refers to an average diameter of a single lithium ion sieve or an average diameter of an aggregate formed of a plurality of lithium ion sieve particles, however, as long as the average particle diameter of a single lithium ion sieve or an average diameter of an aggregate formed of a plurality of lithium ion sieve particles in the cross section of lithium adsorption material satisfies the above range, it indicates that the lithium ion sieve is uniformly distributed in the lithium adsorption material.

In the present disclosure, the average particle diameter of the lithium ion sieve in the lithium adsorption material is measured by a SEM, 10 observation points are randomly selected for carrying out the SEM test, the size of each observation area is not less than $500 \times 500 \mu m$, when the lithium ion sieve is not agglomerated completely, the average particle diameter refers to an average particle diameter of a single lithium ion sieve; when the lithium ion sieve is partially agglomerated, the average particle diameter refers to the maximum particle diameter of the agglomerate.

In the present disclosure, the lithium adsorption material has an average particle diameter of the lithium ion sieve in the cross section of lithium adsorption material measured by a SEM being less than or equal to 2.5μm, for example, the

average particle diameter may be 2.5μm, 2μm, 1.5μm, 1μm, 0.5μm, 0.4μm, 0.3μm, 0.2μm, 0.1μm, and a random value within the range consisting of any two thereof.

Optionally, the lithium adsorption material has an average particle diameter of the lithium ion sieve in the cross section of lithium adsorption material measured by a SEM being less than or equal to 1.5μm, Optionally within the range of 0.1-1.5μm.

According to the present disclosure, the total area S1 of pores present on the shell is 30-90%, based on the total surface area of the shell of said lithium adsorption material.

In the present disclosure, when the total area S1 of pores present on the shell coated on a surface of the core in said lithium adsorption material meets the aforementioned range, the lithium adsorption material has the advantages such as high mass transfer rate for adsorbing water, large adsorption rate, high desorption efficiency, slight degradation of the recycling performance.

In the present disclosure, the total area of pores present on the shell refers to the sum of the surface areas of all the pores present on the shell.

In the present disclosure, both the total surface area of the shell of said lithium adsorption material and the total area S1 of pores present on the shell are measured by using a SEM, in particular, a SEM is used for testing the lithium adsorption material, 10 observation points are randomly selected to carry out the SEM testing, the dimensions of each observation area are not less than $500 \times 500$μm, the sum of the surface areas of the shell and the sum of the areas of all the pores on the shell in the observation range are calculated respectively. The histogram and magic wand tools in the software Photoshop can be selected to obtain the number of pixels representing the dark part of the membrane and pores, the ratio of the said number of pixels to the total number of pixels in the SEM image is then calculated as the percentage of the sum of the surface areas S1 of the pores present on the shell relative to the total surface area of the shell.

In the present disclosure, based on the total surface area of the shell of said lithium adsorption material, the total area of pores present on the shell is 30-90%, for example, it may be 30%, 35%, 40%, 45%, 50%, 55%, 60%, 65%, 70%, 75%, 80%, 85%, 90%, and a random value within the range consisting of any two thereof.

Optionally, the total area of pores present on the shell is 50-90%, based on the total surface area of the shell of said lithium adsorption material.

The second aspect of the present disclosure provides a method for preparing the lithium adsorption material comprising:

(1) mixing polyvinyl chloride, polyacrylic acid and lithium ion sieve with an oil phase solvent to obtain a mixed solution;
(2) dropwise adding the mixed solution to an aqueous solvent under the conditions of a temperature of 20-60°C and a humidity of 40-80% to prepare a lithium adsorption material.

In the disclosure, the lithium adsorption material is prepared with the aforementioned method, in particular, the lithium adsorption material of the first aspect of the present disclosure can be prepared by dropwise adding a mixed solution containing polyvinyl chloride, polyacrylic acid and a lithium ion sieve into an aqueous phase solvent under specific temperature and humidity conditions. Specifically, under the specific temperature and humidity conditions, the conversion rates between the internal phase and the surface phase are different, a special structure having small pores in the surface and large pores in the interior is prepared, so that the lithium adsorption material has a high mass transfer rate of water in the shell, and will not cause the lithium ion sieve in the lithium adsorption material to fall off under the pressure of flowing water, thus the prepared lithium adsorption material has a high adsorption capacity and a long service life.

According to the present disclosure, the lithium ion sieve is selected from titanium based lithium ion sieve and/or manganese based ion sieve.

According to the present disclosure, the lithium ion sieve is at least one selected from the group consisting of $LiMn_2O_4$, $Li_{1.6}Mn_{1.6}O_4$, $L1_{1.33}Mn_{1.67}O_4$, $Li_4Mn_3O_{12}$, $LiMnO_2$, $Li_2TiO_3$, $Li_{1.33}Ti_{1.66}O_4$ and $Li_4Ti_5O_{12}$.

In the present disclosure, the lithium ion sieve has an average particle diameter within a range of 0.1-1μm, such as 0.1μm, 0.2μm, 0.3μm, 0.4μm, 0.5μm, 0.6μm, 0.7μm, 0.8μm, 0.9μm, 1μm, and a random value within the range consisting of any two thereof.

According to the present disclosure, the polyvinyl chloride in step (1) has a weight-average molecular weight within a range of 50,000-110,000 g/mol, such as 50,000 g/mol, 55,000 g/mol, 60,000 g/mol, 65,000 g/mol, 70,000 g/mol, 75,000 g/mol, 80,000 g/mol, 85,000 g/mol, 90,000 g/mol, 95,000 g/mol, 100,000 g/mol, 105,000 g/mol, 110,000 g/mol, and a random value within the range consisting of any two thereof.

Optionally, the polyvinyl chloride has a weight-average molecular weight within a range of 70,000-90,000 g/mol.

In the present disclosure, the kind of the oil phase solvent is not particularly limited, it may be a conventional oil phase solvent in the field, for example, at least one selected from the group consisting of N,N-dimethylformamide, N,N-dimethylacetamide, N-methylpyrrolidone and dimethylsulfoxide.

According to the present disclosure, the polyacrylic acid has a weight-average molecular weight within a range of 100,000-1,300,000 g/mol.

In the present disclosure, when the polyacrylic acid with the specific weight-average molecular weight is selected, an interpenetrating network structure formed between the polyacrylic acid and the polyvinyl chloride molecular chain has an improved mechanical strength, and the polyacrylic acid has the effects of inhibiting salt crystallization, promoting lithium ion transfer and swelling resistance, thus the mechanical property, the adsorption capacity for lithium and the swelling resistance of the finally prepared lithium adsorption material are significantly improved.

In the present disclosure, the polyacrylic acid has a weight-average molecular weight within a range of 100,000-1,300,000 g/mol, such as 100,000 g/mol, 150,000 g/mol, 200,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, 1,000,000 g/mol, 1,100,000 g/mol, 1,200,000 g/mol, 1,300,000 g/mol, and a random value within the range consisting of any two thereof.

Optionally, the polyacrylic acid has a weight-average molecular weight within a range of 100,000-1,300,000 g/mol.

According to the present disclosure, the polyvinyl chloride, the polyacrylic acid and the hydroxyl-modified lithium ion sieve in step (1) are used in such amounts that the polyvinyl chloride is contained in an amount of 16-67wt%, the polyacrylic acid is contained in an amount of 0.06-9wt%, and the lithium ion sieve is contained in an amount of 45-85wt%, based on the total weight of the lithium adsorption material.

In the present disclosure, when the usage amounts of polyvinyl chloride, polyacrylic acid and lithium ion sieve are controlled to satisfy the aforementioned ranges, an interpenetrating network structure formed between the polyacrylic acid and the polyvinyl chloride molecular chain has an improved mechanical strength, and the polyacrylic acid has the effects of inhibiting salt crystallization, promoting lithium ion transfer and swelling resistance, thus the mechanical property, the adsorption capacity for lithium and the swelling resistance of the finally prepared lithium adsorption material are significantly improved.

Optionally, the polyvinyl chloride, the polyacrylic acid and the lithium ion sieve in step (1) are used in such amounts that the polyvinyl chloride is contained in an amount of 16-54wt%, the polyacrylic acid is contained in an amount of 0.9-9wt%, and the lithium ion sieve is contained in an amount of 45-80wt%, based on the total weight of the lithium adsorption material

In the present disclosure, the mixing conditions in step (1) are not particularly limited, as long as the polyvinyl chloride, the polyacrylic acid, the lithium ion sieve and the oil phase solvent can be sufficiently and uniformly mixed to obtain a mixed solution, for example, the mixing is performed at a temperature of 20-70°C under the stirring conditions,.

In a specific embodiment of the present disclosure, in order to fully and uniformly mix the materials in the mixed solution in step (1), optionally, a step-by-step feeding manner is adopted during the mixing process, specifically, after polyvinyl chloride, polyacrylic acid and the oil phase solvent are mixed, a lithium ion sieve is added into the mixed product to obtain the mixed solution.

In the present disclosure, the temperature in step (2) is within a range of 20-60°C, for example, it may be 20°C, 25°C, 30°C, 35°C, 40°C, 45°C, 50°C, 55°C, 60°C, and a random value within the range consisting of any two thereof; the humidity is within a range of 40-80%, such as 40%, 45%, 50%, 55%, 60%, 65%, 70%, 75%, 80%, and a random value within the range consisting of any two thereof.

Optionally, the mixed solution in step (2) is dropwise added into an aqueous phase solvent under the conditions of a temperature of 35-60°C and a humidity of 60-80%.

According to the present disclosure, the aqueous solvent is at least one selected from the group consisting of water, ethanol and acetic acid, optionally water.

According to the present disclosure, in order to improve dispersibility of the lithium ion sieve in the polymer network structure formed by polyvinyl chloride and polyacrylic acid, the lithium ion is optionally a hydroxyl-modified lithium ion sieve.

In the present disclosure, the lithium ion sieve is modified with an aqueous solution of a hydroxyl-containing compound, and subjected to solid-liquid separation and drying to obtain the hydroxyl-modified lithium ion sieve.

According to the present disclosure, the hydroxyl-containing compound is a polyphenol; optionally at least one selected from the group consisting of tannic acid, tea polyphenol, apple polyphenol, grape polyphenol, eriodictyol, naringenin, epicatechin, luteolin, naringenin, kaempferol, myricetin and genistein, more optionally at least one selected from the group consisting of tannic acid, tea polyphenols and apple polyphenol.

According to the present disclosure, the aqueous solution of the hydroxyl-containing compound has a concentration from 0.05mg/L to 0.1mg/L, such as 0.05mg/L, 0.15mg/L, 0.2mg/L, 0.25mg/L, 0.3mg/L, 0.35mg/L, 0.4mg/L, 0.45mg/L, 0.5mg/L, 0.55mg/L, 0.6mg/L, 0.65mg/L, 0.7mg/L, 0.75mg/L, 0.8mg/L, 0.85mg/L, 0.9mg/L, 0.95mg/L, 1mg/L, and a random value within the range consisting of any two thereof.

In the present disclosure, when the concentration of the aqueous solution of the hydroxyl-containing compound is controlled to satisfy the above range, it can ensure that the hydroxyl groups form a coating layer having a suitable thickness on the surface of the lithium ion sieve, and the hydroxyl-modified lithium ion sieve has desirable dispersibility in the polymer skeleton.

According to the present disclosure, the mass ratio of the lithium ion sieve to the hydroxyl-containing compound is 1: (0.01-0.3).

In the present disclosure, when the mass ratio of the lithium ionic sieve to the hydroxyl-containing compound is controlled to satisfy the aforementioned range, it can ensure that the lithium ionic sieve and the hydroxyl-containing compound are sufficiently reacted, and the hydroxyl-containing compound can form a uniform coating layer on the surface of said lithium ionic sieve, such that the dispersibility of the prepared hydroxyl-modified lithium ionic sieve is significantly improved.

In the present disclosure, the mass ratio of the lithium ion sieve to the hydroxyl-containing compound is 1: (0.01-0.3), such as 1:0.01, 1:0.05, 1:0.1, 1:0.15, 1:0.2, 1:0.25, 1:0.3, and a random value within the range consisting of any two thereof

Optionally, the mass ratio of the lithium ion sieve to the hydroxyl group-containing compound is 1: (0.05-0.08).

According to the present disclosure, the modification conditions comprising: a reaction time is within a range of 30min to 4h, for example, the reaction time is 30min, 40min, 50min, 60min, 1.1h, 1.2h, 1.3h, 1.4h, 1.5h, 1.6h, 1.7h, 1.8h, 1.9h, 2h, 2.5h, 3h, 3.5h, 4h, and a random value within the range consisting of any two thereof; and a reaction temperature is within a range of 25-40°C, such as 25°C, 26°C, 27°C, 28°C, 29°C, 30°C, 31°C, 32°C, 33°C, 34°C, 35°C, 36°C, 37°C, 38°C, 39°C, 40°C, and a random value within the range consisting of any two thereof.

In the present disclosure, the modification reaction is carried out under the aforementioned conditions, so that the lithium ionic sieve and the hydroxyl-containing compound can be sufficiently reacted, and the hydroxyl-containing compound can form a uniform coating layer on the surface of said lithium ionic sieve, thereby obviously improving dispersity of the prepared hydroxyl-modified lithium ionic sieve.

In the present disclosure, the modes and conditions of solid-liquid separation and drying are not particularly limited, the conventional solid-liquid separation modes in the field (e.g., centrifugal separation) and conventional drying modes and conditions can be adopted, as long as the water content of the dried hydroxyl-modified lithium ion sieve satisfies the requirements of the present disclosure.

According to the present disclosure, the method optionally comprising: washing the lithium adsorption material with an acidic solution.

In the present disclosure, the lithium adsorption material is a lithium adsorption material precursor, and an acidic solution is used for washing the lithium adsorption material precursor, so that $Li^+$ and $H^+$ in the precursor are exchanged, the activation of the precursor is realized, and the H-type lithium ion sieve is obtained, for example, $Li_{1.33}Mn_{1.67}O_4$ is converted into $H_{1.33}Mn_{1.67}O_4$, and the obtained H-type lithium ion sieve has a specific adsorption effect on lithium ions.

Optionally, the lithium adsorption material is subjected to cyclic washing with an acidic solution under the action of a peristaltic pump.

Optionally, the acidic solution is at least one selected from the group consisting of hydrochloric acid, phosphoric acid and sulfuric acid.

Optionally, the acidic solution has a concentration calculated in terms of $H^+$ ions within a range of 0.1-1mol/L, such as 0.1 mol/L, 0.2 mol/L, 0.3 mol/L, 0.4 mol/L, 0.5 mol/L, 0.6 mol/L, 0.7 mol/L, 0.8 mol/L, 0.9 mol/L, 1mol/L, and a random value within the range consisting of any two thereof.

Optionally, the peristaltic pump has a flow rate within a range of 1-25 BV/h, for example, the flow rate may be 1 BV/h, 5 BV/h, 10 BV/h, 15 BV/h, 20 BV/h, 25 BV/h, and a random value within the range consisting of any two thereof; and the cycle time is within a range of 1-48h, such as 1h, 2h, 4h, 6h, 8h, 10h, 12h, 14h, 16h, 18h, 20h, 22h, 24h, 26h, 28h, 30h, 32h, 34h, 36h, 38h, 40h, 42h, 44h, 46h, 48h, and a random value within the range consisting of any two thereof.

In the present disclosure, when the condition of cyclic washing or the concentration of the acid solution meets the aforementioned range, the structure of the lithium ion sieve will not be damaged while the ion exchange is ensured, and the washed lithium adsorption material can have a high mechanical strength, a high adsorption capacity for lithium, and excellent swelling resistance.

In one specific embodiment of the present disclosure, the concentration of the acidic solution is within a range of 0.1-0.5 mol/L; the flow rate of the peristaltic pump is within a range of 2-10 BV/h, and the cycle time is within a range of 4-24h.

The third aspect of the present disclosure provides a lithium adsorption material prepared with the aforementioned method.

The fourth aspect of the present disclosure provides a method of using the aforementioned lithium adsorption material in extracting lithium, optionally extracting lithium in a liquid environment.

Unless otherwise specified in the present disclosure, the average diameter and the average particle size refer to the average diameter by volume of the particles and the average particle size by volume of the particles.

The present disclosure will be described in detail below with reference to examples. In the following examples, The morphology of the granulated product was characterized by using a scanning electron microscopy (SEM, S-4800, Japan).

Both the shell thickness and the average diameter of the pores on the shell were tested by the scanning electron microscopy.

Both the sum of surface areas S1 of pores on the shell and the sum of maximum cross-sectional areas S2 of the finger-like pores in the core were obtained by analyzing the obtained SEM pictures with the image processing software Image J, and measuring the sum of surface areas of pores and the sum of maximum cross-sectional areas of finger-like pores in the core.

The maximum average length and minimum average length of finger-like pores contained in the core of said lithium adsorption material were tested by using a scanning electron microscopy, and obtained by calculation.

In the present disclosure, the average particle diameter of the lithium ion sieve in the lithium adsorption material was measured by the SEM, when the lithium ion sieve was not agglomerated completely, the average particle diameter referred to an average particle diameter of a single lithium ion sieve; when the lithium ion sieve was partially agglomerated, the average particle diameter referred to the maximum particle diameter of the agglomerate.

The sum of the surface areas of the shell in the lithium absorption material and the sum of the surface areas of pores on the shell were measured by using a SEM, in particular, when the density of pores on the shell of the lithium adsorption material was tested by using a SEM, 10 observation points were randomly selected to carry out the SEM test, the dimensions of each observation area were not less than $500 \times 500\mu m$, both the sum of the surface areas of the shell and the sum of the surface areas of pores on the shell within the observation range were respectively calculated. The histogram and magic wand tools in the software Photoshop can be selected to obtain the number of pixels representing the dark part of the membrane and pores, the ratio of the said number of pixels to the total number of pixels in the SEM image was then calculated as the percentage of the sum of the surface areas S1 of the pores present on the shell relative to the total surface area of the shell.

The average particle size of the lithium adsorption material and the hydroxyl-modified ionic sieve was measured by using a scanning electron microscopy.

The porosity was measured by a mercury porosimeter AutoPore IV 9500 (Micromeritics Instrument Corporation, USA), the specific measurement method comprising: mercury was pressed into the pores of lithium adsorption material under a pressure of 0.1-60 kPa, and the porosity was obtained based on the mercury change curve data.

The specific surface area was measured by a BET method, and the specific method comprising: an adsorption-desorption isotherm of lithium adsorption material to $N_2$ at the temperature of 77K (-196.15°C) was measured, and the BET specific surface area was obtained by fitting.

The contents of polyvinyl chloride, polyacrylic acid and a hydroxyl-modified lithium ion sieve in the lithium adsorption material were obtained by measuring the element contents by using the X-ray photoelectron spectroscopy (XPS), wherein the content of polyvinyl chloride in the lithium adsorption material was calculated according to the content of Cl element, the content of the hydroxyl-modified lithium ion sieve was calculated according to the content of metal Mn or Ti, and the content of polyacrylic acid = the weight of particles of the lithium adsorption material - the content of polyvinyl chloride - the content of the hydroxyl-modified lithium ion sieve.

The thickness of the coating layer formed by the polyphenols in the polyphenol modified lithium ion sieve was measured by using a transmission electron microscopy (TEM).

The water content of the hydroxyl-modified lithium ion sieve was characterized and measured by a moisture content meter.

Adsorption-desorption cycle: the obtained lithium adsorption material particles (4g) was loaded into a glass column and washed with acid (hydrochloric acid with a concentration of 0.5 mol/L in terms of H+ was used for washing at the speed of 2 BV/H for 24H), a lithium chloride and magnesium chloride mixed solution (the lithium ion content of 100mg/L, the magnesium ion concentration of 20,000 mg/L, the pH of the mixed solution was adjusted to 9.5 by using ammonia solution, and V=400 mL) was pumped by a peristaltic pump at the flow rate of 2 BV/H to carry out the dynamic adsorption-desorption cyclic adsorption for 24h. 0.5M hydrochloric acid (200 mL) was then pumped at a flow rate of 2BV/h using a peristaltic pump for circulation 24h to desorb the lithium ions in the particles. The deionized water was subsequently used for washing the mixture until the mixture was neutral, an adsorption-desorption cycle was accomplished. The variation of the adsorption capacity over time in one adsorption process was monitored, and the saturated adsorption capacity Q was calculated, wherein the calculation formula was as follows:

$$Q = \frac{(C_0 - C)V}{m}$$

wherein Q denoted the saturated adsorption capacity, the unit was mg/g, and the adsorption capacity reflected that the adsorption amount when the adsorption reached the equilibrium; $C_0$ and C denoted the initial lithium ion concentrations in the solution and the lithium ion concentrations when the adsorption was saturated, respectively, the unit was mg/L; V denoted the volume of the adsorption solution, the unit was L; m denoted the mass of the granular adsorbent, and the unit was g. The ion concentration was determined using the ion chromatography (ICS-1100, DIONEX, America).

Desorption efficiency $D_{Li+}$ of lithium ions: $D_{Li+}(\%)=(c_1*V_2)/m*100\%$, where $c_1$ denoted the concentration of lithium in the desorption solution, the unit was mg/L; $V_2$ denoted the volume of the desorption solution, the unit was L; m denoted the mass of the adsorbed lithium ions, the unit was g.

The decrease rate of adsorption capacity after 30 cycles of operation was calculated according to the following formula:

the decrease rate of adsorption capacity after 30 cycles of operation, %=(Q1-Q30)/Q1*100%, Q1 denoted the adsorption capacity of the first cycle, and Q30 denoted the adsorption capacity after 30 cycles.

The mass transfer rate of water: the dry lithium adsorbent material per unit mass (mass m0) was soaked in water, the time when the lithium adsorption material reached a fully absorbed state (m, the mass was no longer increased) was recorded, the mass transfer rate of water was in the unit of min/g.

Mechanical properties: after 30 adsorption/desorption cycles (the adsorption process was performed under the condition that the pH was adjusted to 9.5 with ammonia water, while the desorption process was performed with 0.5M hydrochloric acid), no cracks were observed on the surface of the lithium adsorption material by observation with the SEM.

Swelling resistance: after a unit mass of the lithium adsorption material was soaked in a high salinity solution (lithium ion content of 100 mg/L, magnesium ion concentration of 20,000 mg/L) for 48h, the swelling resistance of the lithium adsorption material was characterized by the volume change rate, wherein the volume change rate% = (volume after swelling - volume before swelling) / volume before swelling $\times$100%.

In the following examples and comparative examples: all the reagents were purchased from J&K Scientific Inc.

Example 1

(1) The powder $Li_{1.33}Mn_{1.67}O_4$ (with an average particle size of 0.5$\mu$m) was mixed with an aqueous solution of tannic acid (wherein the concentration of tannic acid was 0.1mg/L), such that the mass ratio of the lithium ion sieve to the polyphenol substance was 1: 0.05, the materials were stirred at 30°C for 2h, and then centrifuged, the solid phase material was subjected to drying, grinding, crushing and sieving to obtain the hydroxyl-modified (polyphenol-modified) lithium ion sieve, wherein the water content was 0.3wt%, and the thickness of a coating layer formed on the surface of the lithium ion sieve by the hydroxyl was 5nm.

(2) 10g of polyvinyl chloride (with the weight-average molecular weight of 62,000 g/mol) powder, 2g of polyacrylic acid (with the weight-average molecular weight of 350,000 g/mol) and 88g of dimethyl formamide (DMF) were weighed, placed in a beaker and subjected to stirring, heating to 60°C, dissolving and then cooling to 30°C, 40g of hydroxyl-modified (polyphenol-modified) lithium ion sieve was added, blended and stirred uniformly at 30°C to obtain a mixed solution.

(3) Under the conditions that the temperature was 30°C and the humidity was 56%, the mixed solution was dropwise added into water, the lithium adsorption material particles A1 were obtained. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 2

(1) The powder $Li_{1.33}Mn_{1.67}O_4$ (with an average particle size of 0.5$\mu$m) was mixed with an aqueous solution of tannic acid (wherein the concentration of tannic acid was 0.05mg/L), such that the mass ratio of the lithium ion sieve to the polyphenol substance was 1: 0.05, the materials were stirred at 30°C for 1h, and then centrifuged, the solid phase material was subjected to drying, grinding, crushing and sieving to obtain the hydroxyl-modified (polyphenol-modified) lithium ion sieve, wherein the water content was 0.3wt%, and the thickness of a coating layer formed on the surface of the lithium ion sieve by the hydroxyl was 3nm.

(2) 8g of polyvinyl chloride (with the weight-average molecular weight of 62,000 g/mol) powder, 0.2g of polyacrylic acid (with the weight-average molecular weight of 350,000 g/mol) and 91.8g of dimethyl formamide (DMF) were weighed, placed in a beaker and subjected to stirring, heating to 60°C, dissolving and then cooling to 30°C, 10g of hydroxyl-modified (polyphenol-modified) lithium ion sieve was added, blended and stirred uniformly at 30°C to obtain a mixed solution.

(3) Under the conditions that the temperature was 55°C and the humidity was 75%, the mixed solution was dropwise added into water, the lithium adsorption material particles A2 were obtained. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 3

(1) The powder $Li_{1.33}Mn_{1.67}O_4$ (with an average particle size of $0.5\mu m$) was mixed with an aqueous solution of tannic acid (wherein the concentration of tannic acid was 0.1mg/L), such that the mass ratio of the lithium ion sieve to the polyphenol substance was 1: 0.01, the materials were stirred at 30°C for 1h, and then centrifuged, the solid phase material was subjected to drying, grinding, crushing and sieving to obtain the hydroxyl-modified (polyphenol-modified) lithium ion sieve, wherein the water content was 0.3wt%, and the thickness of a coating layer formed on the surface of the lithium ion sieve by the hydroxyl was 3.2nm.

(2) 12g of polyvinyl chloride (with the weight-average molecular weight of 62,000 g/mol) powder, 3g of polyacrylic acid (with the weight-average molecular weight of 350,000 g/mol) and 85g of DMF were weighed, placed in a beaker and subjected to stirring, heating to 60°C, dissolving and then cooling to 30°C, 20g of hydroxyl-modified (polyphenol-modified) lithium ion sieve was added, blended and stirred uniformly at 30°C to obtain a mixed solution.

(3) Under the conditions that the temperature was 40°C and the humidity was 42%, the mixed solution was dropwise added into water, the lithium adsorption material particles A3 were obtained. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 4

(1) The powder $Li_{1.33}Mn_{1.67}O_4$ (with an average particle size of $0.5\mu m$) was mixed with an aqueous solution of tannic acid (wherein the concentration of tannic acid was 0.01mg/L), such that the mass ratio of the lithium ion sieve to the polyphenol substance was 1: 0.01, the materials were stirred at 30°C for 1h, and then centrifuged, the solid phase material was subjected to drying, grinding, crushing and sieving to obtain the hydroxyl-modified (polyphenol-modified) lithium ion sieve, wherein the water content was 0.3wt%, and the thickness of a coating layer formed on the surface of the lithium ion sieve by the hydroxyl was 2nm.

(2) 6g of polyvinyl chloride (with the weight-average molecular weight of 62,000 g/mol) powder, 0.1g of polyacrylic acid (with the weight-average molecular weight of 350,000 g/mol) and 93.9g of DMF were weighed, placed in a beaker and subjected to stirring, heating to 60°C, dissolving and then cooling to 30°C, 5g of hydroxyl-modified (polyphenol-modified) lithium ion sieve was added, blended and stirred uniformly at 30°C to obtain a mixed solution.

(3) Under the conditions that the temperature was 30°C and the humidity was 52%, the mixed solution was dropwise added into water, the lithium adsorption material particles A4 were obtained. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 5

The step (1) was same as that in Example 1.

(2) 10g of polyvinyl chloride (with the weight-average molecular weight of 62,000 g/mol) powder, 0.1g of polyacrylic acid (with the weight-average molecular weight of 350,000 g/mol) and 93.9g of DMF were weighed, placed in a beaker and subjected to stirring, heating to 60°C, dissolving and then cooling to 30°C, 5g of hydroxyl-modified (polyphenol-modified) lithium ion sieve was added, blended and stirred uniformly at 30°C to obtain a mixed solution.

(3) The lithium adsorption material particles A5 were obtained according to the same method in Example 1. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 6

(1) The powder $Li_{1.33}Mn_{1.67}O_4$ (with an average particle size of 0.5$\mu$m) was mixed with an aqueous solution of tannic acid (wherein the concentration of tannic acid was 0.1mg/L), such that the mass ratio of the lithium ion sieve to the polyphenol substance was 1: 0.3, the materials were stirred at 30°C for 2h, and then centrifuged, the solid phase material was subjected to drying, grinding, crushing and sieving to obtain the hydroxyl-modified (polyphenol-modified) lithium ion sieve, wherein the water content was 0.3wt%, and the thickness of a coating layer formed on the surface of the lithium ion sieve by the hydroxyl was 2nm.

(2) 10g of polyvinyl chloride (with the weight-average molecular weight of 62,000 g/mol) powder, 0.1g of polyacrylic acid (with the weight-average molecular weight of 350,000 g/mol) and 93.9g of DMF were weighed, placed in a beaker and subjected to stirring, heating to 60°C, dissolving and then cooling to 30°C, 50g of hydroxyl-modified (polyphenol-modified) lithium ion sieve was added, blended and stirred uniformly at 30°C to obtain a mixed solution.

(3) Under the conditions that the temperature was 30°C and the humidity was 56%, the mixed solution was dropwise added into water, the lithium adsorption material particles A6 were obtained. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 7

The lithium adsorption material was prepared according to the same method as that in Example 1, except that tannic acid in step (1) was replaced with polyethylene glycol (with the molecular weight of 1,000 g/mol) to obtain the hydroxyl-modified (polyphenol-modified) lithium ion sieve, wherein the water content was 0.3wt%, and the thickness of a coating layer formed on the surface of the lithium ion sieve by the hydroxyl was 3nm. The lithium adsorption material A7 was prepared. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 8

The lithium adsorption material was prepared according to the same method as that in Example 1, except that wherein the polyvinyl chloride had a weight-average molecular weight of 78,000 g/mol, and the polyacrylic acid had a weight-average molecular weight of 1,300,000 g/mol. The lithium adsorption material A8 was prepared. The water content of the hydroxyl-modified lithium ion sieve and the thickness of the coating layer formed on the surface of the lithium ion sieve by the hydroxyl were shown in Table 1.

The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 9

The lithium adsorption material was prepared according to the same method as that in Example 1, except that modification was not performed in step (1), a lithium ion sieve was directly used, the lithium adsorption material A9 was prepared. The water content of the lithium ion sieve was shown in Table 1.
The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 10

The lithium adsorption material was prepared according to the same method as that in Example 1, except that tannic acid in step (1) was replaced with tea polyphenol to obtain the hydroxyl-modified (polyphenol-modified) lithium ion sieve, wherein the water content was 0.3wt%, and the thickness of a coating layer formed on the surface of the lithium ion sieve by the hydroxyl was 3nm. The lithium adsorption material A10 was prepared. The water content of the hydroxyl-modified lithium ion sieve and the thickness of the coating layer formed on the surface of the lithium ion sieve by the hydroxyl were shown in Table 1.
The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Example 11

The lithium adsorption material was prepared according to the same method as that in Example 1, except that the lithium ion sieve in step (1) was replaced with $Li_2TiO_3$ (with an average particle size of $1\mu m$), to obtain the hydroxyl-modified lithium ion sieve, wherein the water content was 0.3wt%, and the thickness of a coating layer formed on the surface of the lithium ion sieve by the hydroxyl was 4.9nm. The lithium adsorption material A11 was prepared. The water content of the hydroxyl-modified lithium ion sieve and the thickness of the coating layer formed on the surface of the lithium ion sieve by the hydroxyl were shown in Table 1.
The microscopic morphology parameters of the lithium adsorption material particles were shown in Table 2, and the contents of polyvinyl chloride, polyacrylic acid and hydroxyl-modified lithium ion sieve in the lithium adsorption material particles were shown in Table 2.

Comparative Example 1

The lithium adsorption material was prepared according to the same method as that in Example 1, except that the polyacrylic acid was not added. The lithium adsorption material D1 was prepared.

Comparative Example 2

The lithium adsorption material was prepared according to the same method as that in Example 1, except that in step (4), the temperature was 20°C and the humidity was 10%. The lithium adsorption material D2 was prepared.

Comparative Example 3

The lithium adsorption material was prepared according to the same method as that in Example 1, except that the modification operation in step (1) was not performed, and in step (4), the temperature was 20°C and the humidity was 10%. The lithium adsorption material D3 was prepared.

Comparative Example 4

The lithium adsorption material was prepared according to the same method as that in Example 1, except that the modification operation in step (1) was not performed, and the polyacrylic acid was replaced with polyacrylonitrile (with the weight-average molecular weight of 80,000 g/mol). The lithium adsorption material D4 was prepared.

Comparative Example 5

An extrusion method was used for performing granulation. 525g of polyvinyl chloride (with the weight-average molecular weight of 62,000 g/mol) and 175g of thermoplastic acrylic resin (with the weight-average molecular weight of 120,000 g/mol) were heated to 170°C and melted. 250g of $Li_{1.33}Mn_{1.67}O_4$ (with an average particle size of 0.5μm) powder was then added, stirred uniformly and subsequently extruded, cooled and molded. The lithium adsorption material D5 was prepared.

Table 1

| Examples | Water content /wt% | Thickness of coating layer /nm |
|---|---|---|
| Example 1 | 0.3 | 5 |
| Example 2 | 0.3 | 3 |
| Example 3 | 0.3 | 3.2 |
| Example 4 | 0.3 | 2 |
| Example 5 | 0.3 | 5 |
| Example 6 | 0.3 | 2 |
| Example 7 | 0.3 | 5 |
| Example 8 | 0.3 | 5 |
| Example 9 | 0.3 | 0 |
| Example 10 | 0.3 | 4.8 |
| Example 11 | 0.3 | 4.9 |
| Comparative Example 1 | 0.3 | 5 |
| Comparative Example 2 | 0.3 | 5 |
| Comparative Example 3 | 0.3 | 0 |
| Comparative Example 4 | 0.3 | 0 |
| Comparative Example 5 | 0.3 | 0 |

Table 2

| Examples | Shell | | | Core | |
|---|---|---|---|---|---|
| | Average diameter of pores /μm | Thickness /μm | S1/S2 | Maximum average length /μm | Minimum average length /μm |
| Example 1 | 0.5 | 35.5 | 0.8 | 2.5 | 1 |
| Example 2 | 0.4 | 40 | 0.7 | 3 | 0.8 |
| Example 3 | 0.3 | 50 | 0.8 | 3 | 0.6 |
| Example 4 | 0.2 | 45 | 0.6 | 4 | 1.5 |
| Example 5 | 0.05 | 535 | 0.52 | 1.5 | 0.35 |
| Example 6 | 1.8 | 24 | 0.89 | 6.5 | 2 |
| Example 7 | 0.3 | 60 | 0.6 | 3 | 1.5 |
| Example 8 | 0.3 | 80 | 0.6 | 3 | 0.8 |
| Example 9 | 0.4 | 69 | 0.7 | 4 | 1.5 |
| Example 10 | 0.4 | 100 | 0.7 | 5 | 1.5 |
| Example 11 | 0.2 | 500 | 0.8 | 1.2 | 0.5 |
| Comparative Example 1 | 0.003 | 1400 | 2.5 | 0.3 | 0.02 |

(continued)

| Examples | Shell | | | Core | |
|---|---|---|---|---|---|
| | Average diameter of pores /μm | Thickness /μm | S1/S2 | **Maximum** average length /μm | **Minimum** average length /μm |
| Comparative Example 2 | 0.007 | 2300 | 2.5 | 0.3 | 0.03 |
| Comparative Example 3 | 0.009 | 3100 | 2 | 0.2 | 0.01 |
| Comparative Example 4 | 0.03 | 0 | 10 | 0.5 | 0.005 |
| Comparative Example 5 | 0.01 | 0 | 18 | 0.4 | 0.001 |
| Note: S1 denotes the sum of the surface areas of the pores on the shell; S2 denotes the sum of the maximum cross-sectional areas of the finger-like pores in the core. | | | | | |

Table 2 (Continued)

| Examples | Porosity | Proportion of the sum of surface areas of the pores on the shell [1] | Average particle diameter | Average particle size | Specific surface area |
|---|---|---|---|---|---|
| | % | % | μm | mm | m²/g |
| Example 1 | 71 | 76 | 1.5 | 3.5 | 55 |
| Example 2 | 70 | 54 | 1.6 | 3.5 | 50 |
| Example 3 | 66 | 88 | 1.5 | 3.5 | 48 |
| Example 4 | 72 | 58 | 1.4 | 3.5 | 52 |
| Example 5 | 61 | 52 | 1.5 | 3.5 | 25 |
| Example 6 | 78 | 75 | 1.3 | 3.5 | 53 |
| Example 7 | 63 | 74 | 1.4 | 3.5 | 51 |
| Example 8 | 69 | 71 | 1.5 | 3.5 | 49 |
| Example 9 | 67 | 72 | 1.8 | 3.5 | 36 |
| Example 10 | 71 | 70 | 1.4 | 3.5 | 46 |
| Example 11 | 68 | 71 | 1.6 | 3.5 | 42 |
| Comparative Example 1 | 15 | 18 | 6.2 | 2.5 | 15 |
| Comparative Example 2 | 19 | 49 | 7.1 | 2.8 | 18 |
| Comparative Example 3 | 23 | 35 | 5.8 | 2.8 | 24 |
| Comparative Example 4 | 17 | 21 | 5.9 | 3.8 | 18 |
| Comparative Example 5 | 14 | 14 | 6.7 | 1.5 | 15 |
| Note: [1] refers to the sum of surface areas S1 of the pores on the shell / the total surface area of the shell layer ×100%. | | | | | |

Table 2 (Continued)

| Examples | PVC /wt% | Polyacrylic acid /wt% | Hydroxyl-modified lithium ion sieve /wt% |
|---|---|---|---|
| Example 1 | 19.2 | 3.9 | 76.9 |
| Example 2 | 44 | 1.1 | 54.9 |
| Example 3 | 34.5 | 8.5 | 57 |
| Example 4 | 54.1 | 0.9 | 45 |
| Example 5 | 66.64 | 0.06 | 33.3 |

(continued)

| Examples | PVC /wt% | Polyacrylic acid /wt% | Hydroxyl-modified lithium ion sieve /wt% |
|---|---|---|---|
| Example 6 | 16.44 | 0.16 | 83.4 |
| Example 7 | 19.3 | 3.8 | 76.9 |
| Example 8 | 19.3 | 3.8 | 76.9 |
| Example 9 | 19.3 | 3.8 | 76.9* |
| Example 10 | 19.3 | 3.8 | 76.9 |
| Example 11 | 19.3 | 3.8 | 76.9 |
| Comparative Example 1 | 20 | 0 | 80 |
| Comparative Example 2 | 19.3 | 3.8 | 76.9 |
| Comparative Example 3 | 19.3 | 3.8 | 76.9 |
| Comparative Example 4 | 19.2 | 3.9** | 76.9* |
| Comparative Example 5 | 55.3 | 18.4 | 26.3* |
| Note: * refers to the content of unmodified lithium ion sieve; ** refers to the content of polyacrylonitrile. | | | |

As illustrated by Table 2, the lithium adsorption materials provided by Examples 1-11 of the present disclosure comprise a core with a specific pore structure and surface pores with a specific average diameter coated on the surface of said core, and the shell has a specific thickness, the lithium adsorption material with the specific structure has a special structure having small pores in the outer shell and large pores in the inner core, the mass transfer rate of water can be increased, and when the lithium adsorption material is used for extracting lithium in a liquid environment, the adsorption capacity for lithium can be significantly improved.

As can be seen with reference to Table 1, the hydroxyl-containing compound is used for modifying the lithium ion sieve to obtain hydroxyl-modified lithium ion sieve. When the hydroxyl-modified lithium ion sieve is used for preparing a lithium adsorption material, the lithium ion sieve in the lithium adsorption material has better dispersibility and particle size distribution due to the increased compatibility, thereby improving the properties such as lithium adsorption capacity and water mass transfer rate when the lithium ion sieve is used for extracting lithium in a liquid environment.

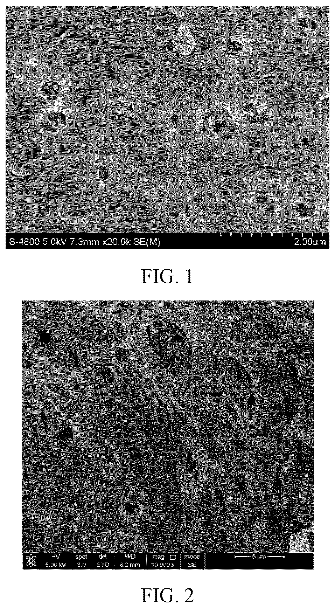

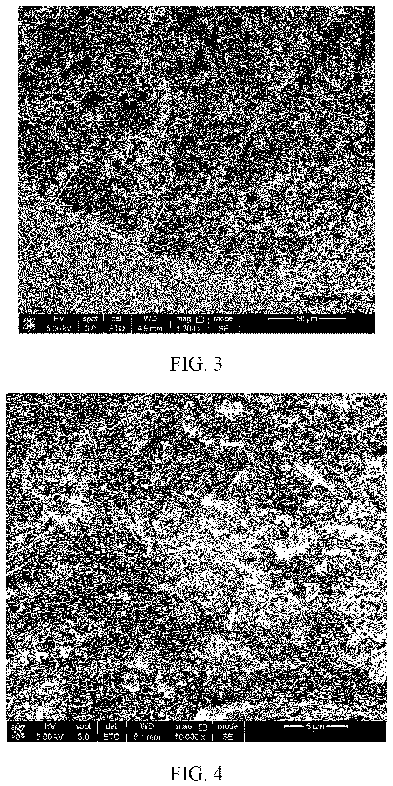

FIG. 1 illustrates a SEM photograph of a surface of the lithium adsorption material prepared in Example 1, FIG. 2 illustrates a SEM photograph of a cross section of the lithium adsorption material prepared in Example 1. As can be seen, the lithium adsorption material particles of Example 1 have a uniform pore diameter on the surface of said particles, the particle size is about 0.5μm. The cross section illustrates the finger-like pores, which have the maximum average length of 2.5μm, and the minimum average length of 1μm. FIG. 3 illustrates a SEM image of a cross section of the lithium adsorption material prepared in Example 1. As illustrated by FIG. 3, the thickness of the shell of the lithium adsorption material particles in Example 1 is about 35.5μm.

Although the lithium adsorption materials prepared in Comparative Examples 1-3 also exhibit a spherical shape and have an average particle diameter within the range of 2-5mm, the lithium adsorption materials prepared in Comparative Examples 1-3 do not have a specific pore structure defined in the present disclosure, and the shell pores and the cross section pores of the lithium adsorption materials are dense and exiguous, resulting in a significant decrease in the porosity and BET of the lithium adsorption materials.

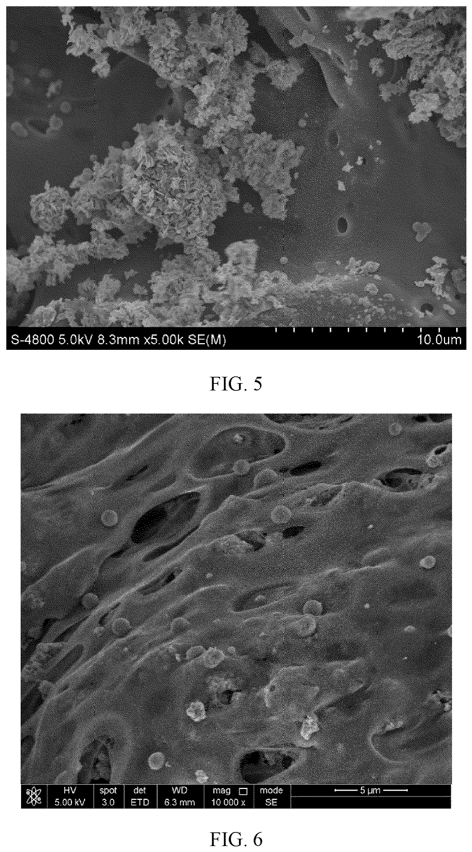

FIG. 4 illustrates a SEM image of a cross section of the lithium adsorption material prepared in Comparative Example 1, and FIG. 5 illustrates a SEM image of a cross section of the lithium adsorption material prepared in Comparative Example 2, as can be seen from FIG. 4 and FIG. 5, the lithium adsorption material powders prepared in Comparative Examples 1-2 are substantially agglomerated in the polymer skeleton, and as shown in Table 2, the average particle diameter of the lithium ion sieve in cross section of the lithium adsorption materials prepared by Comparative Example 1 and Comparative Example 2 is significantly increased.

The adsorption properties of the lithium adsorption materials prepared in the Examples and the Comparative Examples are tested, and the results are shown in Table 3.

Table 3

| Examples | Water mass transfer rate min/g | Adsorption capacity mg/g | Desorption efficiency % | Volume change rate % | Reduction rate of adsorption capacity after 30 cycles % |
|---|---|---|---|---|---|
| Example 1 | 32 | 23 | 98.5 | 0.22 | 0.8 |
| Example 2 | 28.5 | 16.4 | 97.2 | 0.24 | 0.9 |
| Example 3 | 31.5 | 17.1 | 99.5 | 0.22 | 0.8 |
| Example 4 | 30.8 | 13.5 | 92.1 | 0.22 | 0.9 |
| Example 5 | 36.9 | 9.9 | 92.2 | 0.56 | 0.98 |
| Example 6 | 37.1 | 18.9 | 92.3 | 0.95 | 0.95 |
| Example 7 | 36 | 21.3 | 97.2 | 0.48 | 0.9 |
| Example 8 | 41 | 18.2 | 96.3 | 0.36 | 0.8 |
| Example 9 | 56 | 13.2 | 90.5 | 0.44 | 0.7 |
| Example 10 | 34 | 21 | 97.4 | 0.39 | 0.9 |
| Example 11 | 32.1 | 22.1 | 97.4 | 0.51 | 0.9 |
| Comparative Example 1 | 108 | 12 | 81.5 | 4.9 | 16 |
| Comparative Example 2 | 126 | 15 | 84.8 | 3.2 | 2.9 |
| Comparative Example 3 | 139 | 11.8 | 88.5 | 3.8 | 19 |
| Comparative Example 4 | 159 | 8.9 | 92.5 | 3.6 | 5.6 |
| Comparative Example 5 | 184 | 7.1 | 88.2 | 1.1 | 3.9 |

As can be seen from the results of Table 3, the lithium adsorption materials prepared in Examples 1-11 of the present disclosure have a higher mass transfer rate of water compared to those of Comparative Examples 1-3, and the corresponding adsorption capacity is larger, when the lithium adsorption materials prepared in Examples 1-11 are soaked in a high salinity solution (with the lithium ion content of 100 mg/L, and the magnesium ion concentration of 20,000 mg/L) for 48h, the volume change (volume expansion ratio) is within 1%, indicating that the lithium adsorption materials provided in the present disclosure have a high swelling resistance.

The lithium adsorption materials prepared in Examples 1-11 are subjected to adsorption under the condition of the pH=9.5, and subjected to desorption with 0.5M HCl solution, and after 30 cycles of adsorption-desorption, the solution is clarified, indicating the lithium ion sieve does not fall off from the skeleton of the lithium adsorption materials, and the adsorption capacity does not decrease significantly after 30 cycles of adsorption-desorption.

Optionally, as shown in FIG. 6, by observing a SEM image of a cross section of the lithium adsorption material prepared in Example 1 after use for 30 cycles (adsorption at the pH=9.5, desorption with 0.5M HCl solution) in an adsorption column, it is found that the lithium ion sieve powder in the lithium adsorption material is uniformly dispersed, the internal pores and channels of the lithium adsorption material do not exhibit salt crystallization and cracks, indicating that the lithium adsorption material has excellent mechanical properties.

In contrast, after the lithium adsorption materials prepared in Comparative Example 1 and Comparative Example 3 are used in 30 cycles of adsorption-desorption (adsorption at the pH=9.5, desorption with 0.5M HCl solution), the solution becomes dark brown, and lithium ion sieve powder is leaked in the solution, thus the adsorption and desorption performance is remarkably degraded.

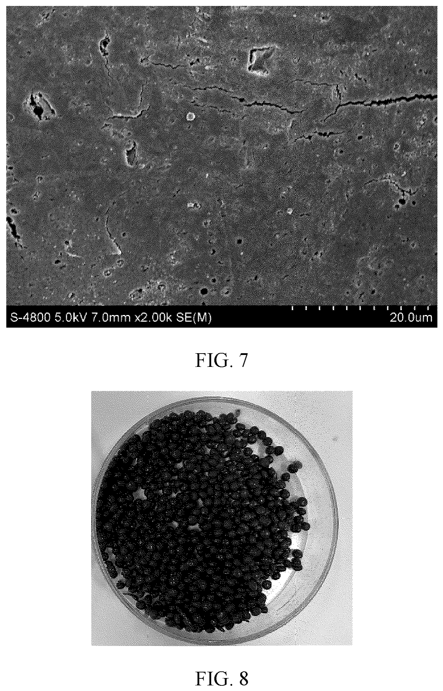

Optionally, as shown in FIG. 7, by observing a SEM image of a cross section of the lithium adsorption material prepared in Comparative Example 1 after use for 30 cycles (adsorption at the pH=9.5, desorption with 0.5M HCl solution) in an adsorption column, it is found that the internal pores and channels of the lithium adsorption material exhibits salt crystallization and cracks

FIG. 8 is a photograph illustrating the lithium adsorption material prepared in Example 1 of the present disclosure, as can be seen from FIG. 8, the lithium ion adsorption material of the present disclosure is in a spherical shape and/or a spheroidal shape.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

**Claims**

1.  A lithium adsorption material, wherein the lithium adsorption material comprises a core and a shell covering the surface of the core;

    pores exist in the shell of the lithium adsorption material, and an average diameter of the pores measured by a SEM is 0.01-2.5$\mu$m;
    the core of the lithium adsorption material comprises finger-like pores, and in the cross section of the lithium adsorption material, a maximum average length of the finger-like pores measured by the SEM is 1-7$\mu$m, and a minimum average length of the finger-like pores measured by the SEM is 0.05-2.5$\mu$m;
    the minimum average length of the finger-like pores in the core is greater than the average diameter of the pores on the shell;
    s thickness of the shell of the lithium adsorption material measured by the SEM is 1-550$\mu$m.

2.  The lithium adsorption material according to claim 1, wherein the average diameter of the pores formed in the shell of said lithium adsorption material measured by a SEM is 0.1-0.5$\mu$m;

    the finger-like pores in the cross section of said lithium adsorption material have the maximum average length measured by a SEM within the range of 2-5$\mu$m, and the minimum average length measured by a SEM within a range of 0.5-1.5$\mu$m;
    the thickness of the shell of said lithium adsorption material measured by a SEM is within a range of 30-500$\mu$m.

3.  The lithium adsorption material according to claim 1 or 2, wherein the lithium adsorption material has a porosity within a range of 60-80%, preferably within a range of 65-75%;

    and/or, the lithium adsorption material is in a spherical shape and/or a spheroidal shape;
    and/or, the lithium adsorption material has an average particle size within a range of 2-5mm, more preferably within a range of 3-4mm;
    and/or, the lithium adsorption material has a specific surface area within a range of 10-100 $m^2$/g, more preferably within a range of 35-65 $m^2$/g.

4.  The lithium adsorption material according to any one of claims 1-3, wherein a ratio of the sum of surface areas S1 of the pores on the shell and the sum of the maximum cross-sectional areas S2 of the finger-like pores in the core is (0.5-0.9) :1, preferably (0.6-0.8) :1.

5.  The lithium adsorption material according to any one of claims 1-4, wherein the lithium adsorption material comprises a skeleton and a lithium ion sieve dispersed in the skeleton;

    the skeleton comprises polyvinyl chloride and polyacrylic acid;
    preferably, the lithium ion sieve is a hydroxyl-modified lithium ion sieve, the lithium ion sieve is connected with the skeleton through the hydroxyl groups.

6.  The lithium adsorption material according to claim 5, wherein the polyvinyl chloride is contained in an amount of 16-67wt%, the polyacrylic acid is contained in an amount of 0.06-9wt%, and the lithium ion sieve is contained in an amount of 45-85wt%, based on the total weight of the lithium adsorption material;
    preferably, the polyvinyl chloride is contained in an amount of 16-54wt%, the polyacrylic acid is contained in an amount of 0.9-9wt%, and the lithium ion sieve is contained in an amount of 45-80wt%, based on the total weight of the lithium adsorption material.

7.  The lithium adsorption material according to claim 5 or 6, wherein a coating layer formed by a compound with hydroxyl provided by the hydroxyl-modified lithium ion sieve has a thickness within a range of 1-5nm, preferably within a range of 3-5nm;

preferably, the hydroxyl-modified lithium ion sieve is a polyphenol-modified lithium ion sieve;

and/or, the polyphenol is at least one selected from the group consisting of tannic acid, tea polyphenol, apple polyphenol, grape polyphenol, eriodictyol, naringenin, epicatechin, luteolin, naringenin, kaempferol, myricetin and genistein;

and/or, the lithium ion sieve is selected from titanium based lithium ion sieve and/or manganese based ion sieve;

preferably, the lithium ion sieve is at least one selected from the group consisting of $LiMn_2O_4$, $Li_{1.6}Mn_{1.6}O_4$, $Li_{1.33}Mn_{1.67}O_4$, $Li_4Mn_5O_{12}$, $LiMnO_2$, $Li_2TiO_3$, $Li_{1.33}Ti_{1.66}O_4$ and $Li_4Ti_5O_{12}$;

and/or the hydroxyl-modified lithium ion sieve has a water content less than or equal to 0.5wt%, more preferably within a range of 0.1-0.3wt%.

8. The lithium adsorption material according to any one of claims 5-7, wherein the lithium adsorption material has an average particle diameter of the lithium ion sieve in the cross section of lithium adsorption material measured by a SEM being less than or equal to 2.5μm, preferably less than or equal to 1.5 μm.

9. The lithium adsorption material according to any one of claims 1-8, wherein the total area of pores present on the shell is 30-90%, preferably 50-90%, based on the total surface area of the shell of said lithium adsorption material.

10. A method for preparing the lithium adsorption material according to any one of claims 1-9 comprising :

(1) mixing polyvinyl chloride, polyacrylic acid and lithium ion sieve with an oil phase solvent to obtain a mixed solution;
(2) dropwise adding the mixed solution to an aqueous solvent under the conditions of a temperature of 20-60°C and a humidity of 40-80% to prepare a lithium adsorption material.

11. The method according to claim 10, wherein the lithium ion sieve in step (1) is selected from titanium based lithium ion sieve and/or manganese based ion sieve;

preferably, the lithium ion sieve is at least one selected from the group consisting of $LiMn_2O_4$, $Li_{1.6}Mn_{1.6}O_4$, $Li_{1.33}Mn_{1.67}O_4$, $Li_4Mn_5O_{12}$, $LiMnO_2$, $Li_2TiO_3$, $Li_{1.33}Ti_{1.66}O_4$ and $Li_4Ti_5O_{12}$;

and/or, the polyvinyl chloride has a weight-average molecular weight within a range of 50,000-110,000 g/mol;

and/or, the polyacrylic acid has a weight-average molecular weight within a range of 100,000-1,300,000 g/mol;

and/or, the oil phase solvent is at least one selected from the group consisting of N,N-dimethylformamide, N,N-dimethylacetamide, N-methylpyrrolidone and dimethylsulfoxide;

and/or, the polyvinyl chloride, the polyacrylic acid and the hydroxyl-modified lithium ion sieve are used in such amounts that the polyvinyl chloride is contained in an amount of 16-67wt%, the polyacrylic acid is contained in an amount of 0.06-9wt%, and the lithium ion sieve is contained in an amount of 45-85wt%, based on the total weight of the lithium adsorption material;

preferably, the polyvinyl chloride is contained in an amount of 16-54wt%, the polyacrylic acid is contained in an amount of 0.9-9wt%, and the lithium ion sieve is contained in an amount of 45-80wt%, based on the total weight of the lithium adsorption material.

12. The method according to claim 10, wherein dropwise adding the mixed solution to an aqueous solvent in step (2) under the conditions of a temperature of 35-60°C and a humidity of 60-80%;

preferably, the aqueous solvent is at least one selected from the group consisting of water, ethanol and acetic acid, more preferably water.

13. The method according to any one of claims 10-12, wherein the lithium ion sieve is a hydroxyl-modified lithium ion sieve;

preferably, the lithium ion sieve is modified with an aqueous solution of a hydroxyl-containing compound, and subjected to solid-liquid separation and drying to obtain the hydroxyl-modified lithium ion sieve;

preferably, the hydroxyl-containing compound is a polyphenol; more preferably at least one selected from the group consisting of tannic acid, tea polyphenol, apple polyphenol, grape polyphenol, eriodictyol, naringenin, epicatechin, luteolin, naringenin, kaempferol, myricetin and genistein;

preferably, the aqueous solution of the hydroxyl-containing compound has a concentration from 0.05mg/L to 0.1mg/L.

preferably, the mass ratio of the lithium ion sieve to the hydroxyl-containing compound is 1: (0.01-0.3);

preferably, the modification conditions comprising: a reaction time within a range of 30min to 4h and a reaction temperature within a range of 25-40°C.

14. The method according to any one of claims 10-13, wherein the method comprising: washing the lithium adsorption material with an acidic solution;

preferably, the lithium adsorption material is subjected to cyclic washing with an acidic solution under the action of a peristaltic pump;
preferably, the acidic solution is at least one selected from the group consisting of hydrochloric acid, phosphoric acid and sulfuric acid;
preferably, the acidic solution has a concentration calculated in terms of $H^+$ ions within a range of 0.1-1mol/L;
preferably, the peristaltic pump has a flow rate within a range of 1-25 BV/h and a cycle time within a range of 1-48h.

15. A lithium adsorption material prepared with the method according to any one of claims 10-14.

16. A method of using the lithium adsorption material according to any one of claims 1-9 and 15 in extracting lithium, preferably extracting lithium in a liquid environment.

FIG. 1

FIG. 2

FIG. 3

FIG. 4

FIG. 5

FIG. 6

FIG. 7

FIG. 8

## INTERNATIONAL SEARCH REPORT

International application No.

**PCT/CN2024/101859**

### A.    CLASSIFICATION OF SUBJECT MATTER

B01J20/26(2006.01)i; B01J20/28(2006.01)i; B01J20/32(2006.01)i; C02F1/28(2023.01)i; C22B3/24(2006.01)i

According to International Patent Classification (IPC) or to both national classification and IPC

### B.    FIELDS SEARCHED

Minimum documentation searched (classification system followed by classification symbols)

IPC: B01J C02F C22B

Documentation searched other than minimum documentation to the extent that such documents are included in the fields searched

Electronic data base consulted during the international search (name of data base and, where practicable, search terms used)

CNABS; DWPI; WPABS; CNKI; CNTXT; USTXT; WOTXT; EPTXT; ISI_Web of Science: 中国石油化工股份有限公司, 中石化 (北京) 化工研究院有限公司, 赵慕华, 刘铁群, 潘国元, 提锂, 锂吸附, 离子筛, 聚氯乙烯, 聚丙烯酸, 核, 芯, 壳, 包覆, 湿度, 温度, 孔径, 厚度, extraction, adsorption, recovery, ion sieve, PVC, Polyvinyl chloride, Polyacrylic acid, PAA, core, shell, humidity, temperature, pore size, thickness

### C.    DOCUMENTS CONSIDERED TO BE RELEVANT

| Category* | Citation of document, with indication, where appropriate, of the relevant passages | Relevant to claim No. |
|---|---|---|
| A | CN 109225124 A (EAST CHINA UNIVERSITY OF SCIENCE AND TECHNOLOGY) 18 January 2019 (2019-01-18)<br>description, paragraphs 5-24 | 1-16 |
| A | CN 113996274 A (WANHUA CHEMICAL GROUP CO., LTD.) 01 February 2022 (2022-02-01)<br>description, paragraphs 5-32 | 1-16 |
| A | CN 112352059 A (LILAC SOLUTIONS INC.) 09 February 2021 (2021-02-09)<br>description, paragraphs 10-71 | 1-16 |
| A | ZHANG, Guotai et al. "Synthesis and performance estimation of a granulated PVC/PAN-lithium ion-sieve for Li+ recovery from brine"<br>*Separation and Purification Technology*, Vol. 305, 05 November 2022 (2022-11-05), pages 1-11<br>ISSN: 1383-5866,<br>page 2, left column, paragraph 2-page 3, left column, paragraph 1 | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 September 2024** | **30 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/101859**

| Patent document cited in search report | | | Publication date (day/month/year) | Patent family member(s) | | | Publication date (day/month/year) |
|---|---|---|---|---|---|---|---|
| CN | 109225124 | A | 18 January 2019 | None | | | |
| CN | 113996274 | A | 01 February 2022 | CN | 113996274 | B | 13 October 2023 |
| CN | 112352059 | A | 09 February 2021 | EP | 3752653 | A1 | 23 December 2020 |
| | | | | EP | 3752653 | A4 | 10 November 2021 |
| | | | | KR | 20200111275 | A | 28 September 2020 |
| | | | | KR | 102667270 | B1 | 17 May 2024 |
| | | | | JP | 2021514030 | A | 03 June 2021 |
| | | | | JP | 7379351 | B2 | 14 November 2023 |
| | | | | JP | 2024023216 | A | 21 February 2024 |
| | | | | WO | 2019160982 | A1 | 22 August 2019 |
| | | | | US | 2019256987 | A1 | 22 August 2019 |
| | | | | US | 10648090 | B2 | 12 May 2020 |
| | | | | AR | 114628 | A1 | 30 September 2020 |
| | | | | HK | 40043625 | A0 | 17 September 2021 |
| | | | | AR | 127977 | A2 | 13 March 2024 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310769636